# EUROPÄISCHE PATENTSCHRIFT

(11) **EP 2 791 799 B1**
(45) Veröffentlichungstag und Bekanntmachung des Hinweises auf die Patenterteilung: **09.05.2018**
(21) Anmeldenummer: 12812815.4
(22) Anmeldetag: 12.12.2012
(51) Int. Cl.: G06F 9/54

(54) **VERFAHREN ZUR INTEGRATION VON EDV-SYSTEMEN IN EIN SYSTEM-OF-SYSTEMS**
METHOD FOR INTEGRATING EDP SYSTEMS INTO A SYSTEM-OF-SYSTEMS
PROCÉDÉ D'INTÉGRATION DE SYSTÈMES DE TRAITEMENT ÉLECTRONIQUE DE DONNÉES DANS UN SYSTÈME DE SYSTÈMES

(30) Priorität: 13.12.2011 AT 18252011
(43) Veröffentlichungstag der Anmeldung: 22.10.2014
(73) Patentinhaber: FTS Computertechnik GmbH, 1040 Wien (AT)
(72) Erfinder: POLEDNA, Stefan, 3400 Klosterneuburg (AT)
(74) Vertreter: Patentanwaltskanzlei Matschnig & Forsthuber OG
(86) Internationale Anmeldenummer: PCT/AT2012/050194
(87) Internationale Veröffentlichungsnummer: WO 2013/086554

(56) Entgegenhaltungen:
- EP-A1- 1 202 167
- WO-A2-00/34864
- US-A1- 2005 144 591
- DELAURENTIS D A ET AL: "A Taxonomy-based Perspective for Systems of Systems Design Methods", SYSTEMS, MAN AND CYBERNETICS, 2005 IEEE INTERNATIONAL CONFERENCE ON, IEEE, PISCATAWAY, NJ, USA, Bd. 1, 10. Oktober 2005 (2005-10-10), Seiten 86-91, XP010875379, DOI: 10.1109/ICSMC.2005.1571126 ISBN: 978-0-7803-9298-4
- KOPETZ H ET AL: "Periodic Finite-State Machines", OBJECT AND COMPONENT-ORIENTED REAL-TIME DISTRIBUTED COMPUTING, 2007. I SORC '07. 10TH IEEE INTERNATIONAL SYMPOSIUM ON, IEEE, PI, 1 May 2007 (2007-05-01), pages 10-20, XP031090591, DOI: 10.1109/ISORC.2007.47 ISBN: 978-0-7695-2765-9

## Beschreibung

Die vorliegende Erfindung liegt im Bereich der Computertechnik.

Insbesondere betrifft die Erfindung ein Verfahren gemäß dem Oberbegriff des Anspruchs 1.

Weiters betrifft die Erfindung ein System-of-Systems gemäß dem Oberbegriff des Anspruchs 4.

Ein solches Verfahren bzw. System-of-Systems ist aus der US 2005/144591 A1 bekannt.

Durch die Integration bestehender EDV Systeme (*legacy systems)* in ein *System-of-Systems* (*SoS*) können neue Dienste angeboten und wirtschaftliche Vorteile realisiert werden. Kennzeichnend für ein solches SoS ist, dass die einzelnen EDV Systeme, die dynamisch in ein SoS integriert werden, von unabhängigen Organisationen betrieben werden, die ihre EDV Systeme laufend den sich ändernden lokalen Anforderungen anpassen müssen. Es ist deshalb schwierig, in einem großen SoS ein konsistentes Verhalten aller beteiligten EDV Systeme zu garantieren.

Die Methode ein SoS zu entwickeln, die in [1] offengelegt wird, geht auf diese kontinuierliche unkoordinierte Evolution der einzelnen EDV Systeme eines SoS nicht ein. Vielmehr wird in diesem Ansatz ein einziges hierarchisches Architekturmodell vorgeschlagen, in dem alle Änderungen konsistent gehalten werden können. Dies setzt voraus, dass alle EDV Systeme, die in das SoS integriert werden, von einer einzigen Instanz verwaltet werden, was in vielen SoSs nicht der Fall ist.

Das Patent *Remote Component and Connection Architecture [*2*]* legt eine Methode offen, wie eine dynamische Verkettung von Software Komponenten realisiert werden kann. Das Problem einer möglichen Inkonsistenz der Softwarekomponenten, die sich durch die notwendigen lokalen Änderungen ergeben, wird in [2] nicht behandelt.

Die Integration der einzelnen EDV Systeme in ein SoS erfolgt über die Bereitstellung und den Aufruf von Diensten an einer gemeinsamen Schnittstelle zwischen einem einen Dienst anbietenden EDV System (*service providing System--SPS*) und einem einen Dienst anfordernden EDV System (*service requesting System-SRS*)*.* Das SPS spezifiziert in dieser gemeinsamen Schnittstelle den Dienst, den es zu leisten in der Lage ist, wie z.B. in [3] ausgeführt. Das SRS überprüft auf der Basis dieser Schnittstellenspezifikation, ob der angebotene Dienst die Anforderungen des SRS erfüllt und, falls dies der Fall ist, aktiviert mittels eines entsprechenden Aufrufs den Dienst. Da Änderungen in dem Dienst des SPS jederzeit vorgenommen werden können, kann zwischen dem Zeitpunkt der Überprüfung des Dienstes und dem Zeitpunkt des Aufrufs des Dienstes eine solche Änderung stattfinden. In diesem Fall wird das SRS eine Antwort erhalten, die falsch sein kann.

Es ist eine Aufgabe der Erfindung, ein verbessertes Verfahren zur Integration einer Menge von EDV-Systemen in ein SoS anzugeben.

Diese Aufgabe wird mit einem eingangs erwähnten Verfahren mit den Merkmalen des Kennzeichens des Anspruchs 1 sowie mit einem eingangs erwähnten System-of-Systems mit den Merkmalen des Kennzeichens des Anspruchs 4 gelöst.

Mit der vorliegenden Erfindung wird also das oben genannte Problem dadurch gelöst, dass alle beteiligten EDV System Zugriff auf eine gemeinsame Zeit (wie in [4] angeführt) haben und jedes SPS in der gemeinsamen Schnittstelle mindestens ein *Gültigkeitszeitfeld* verwaltet das angibt, bis zu welchem zukünftigen Zeitpunkt die angebotene Schnittstellenspezifikation und die darin enthaltenen Informationen gültig sein werden. Das SPS geht die Verpflichtung ein, vor diesem im *Gültigkeitszeitfeld* enthaltenen Zeitpunkt weder die Syntax noch die Semantik des angebotenen Dienstes, noch den Inhalt der dargebotenen Informationen zu ändern. Gegebenenfalls können zwei unterschiedliche *Gültigkeitszeitfelder* eingeführt werden, wobei ein *Gültigkeitszeitfeld* die Gültigkeit der Syntax und Semantik der Schnittstellenspezifikation und weiteres *Gültigkeitszeitfeld* die Gültigkeit der dargebotenen Information beschränkt. In einem statischen System, in dem weder die Syntax noch die Semantik des angebotenen Dienstes verändert werden, genügt ein einziges *Gültigkeitszeitfeld,* das die Gültigkeit der dargebotenen Information beschränkt. Ein weiteres Zeitfeld (*Timeout_1*) in der gemeinsamen Schnittstelle gibt an wie lange die Abarbeitung eines Dienstes durch das SPS dauert. Ein SRS kann nun vor Inanspruchnahme des Dienstes überprüfen, ob der Dienst vor Ende des Gültigkeitszeit der Schnittstellenspezifikation abgeschlossen sein wird und kann bei Aufruf eines Dienstes ein lokales *Timeout_1* im SRS setzen, um einen Ausfall eines Dienstes sofort erkennen zu können.

Die vorliegende Erfindung legt somit ein Verfahren offen, wie autonome EDV Systeme, die in unterschiedlichen Organisationen betrieben werden, dynamisch in ein System-of-Systems (SoS) integriert werden können. Durch die Einführung einer globalen Zeit und die Angabe von Gültigkeitszeiten in der Schnittstellenspezifikation eines einen Dienst anbietenden EDV Systems kann das Problem der unkoordinierten Evolution der autonomen EDV Systeme, die ein SoS bilden, gelöst werden.

Von Vorteil ist es, wenn die globale Zeit mit der temps atomique international (TAI) mit einer Genauigkeit A synchronisiert ist.

Weiters ist im Rahmen der Erfindung vorgesehen, dass die globale Zeit *sparse* ist, sodass die EDV-Systeme nur in erlaubten Zeitintervallen kommunizieren.

Günstig kann es sein, wenn die den Dienst spezifizierende Schnittstelle zwei Gültigkeitszeitfelder enthält, wobei ein Gültigkeitszeitfeld den Zeitpunkt angibt, bis zu dem die Syntax und Semantik der Schnittstelle unverändert bleiben, und das zweite Gültigkeitszeitfeld den Zeitpunkt angibt, bis zu dem die Informationen in der Schnittstelle zeitlich gültig sind.

Außerdem ist erfindungsgemäß vorgesehen, dass ein service requesting system ("SRS") vor der Inanspruchnahme eines Dienstes eines SPS überprüft, ob das erwartete Ende eines in Anspruch genommen Dienstes vor dem Gültigkeitszeitpunkt liegt, der in der Schnittstellenspezifikation des aufgerufenen SPS enthalten ist.

Zusätzlich ist erfindungsgemäß vorgesehen, dass die Schnittstellenspezifikation eines SPS zusätzlich ein Timeoutfeld_1 enthält, in dem angegeben ist, wie viel Zeit das SPS benötigen wird, um eine Anforderung eines service requesting system SRS abzuarbeiten.

Es kann von Vorteil sein, wenn ein service requesting system SRS bei Aufruf eines Dienstes des SPS den in einem Timeoutfeld_1 des SPS enthaltene Wert als Timeout setzt, um einen Antwortfehler eines SPS sofort erkennen zu können.

Die vorliegende Erfindung wird an Hand der folgenden Zeichnungen erklärt. In dieser zeigt
Fig. 1 den Aufbau eines SoS bestehend aus vier unabhängigen EDV Systemen und ein sie verbindendes Kommunikationssystem, und
Fig. 2 die zeitliche Lage von zwei verschiedenen Versionen einer Schnittstelle eines SPS und den Aufruf eines Dienstes.

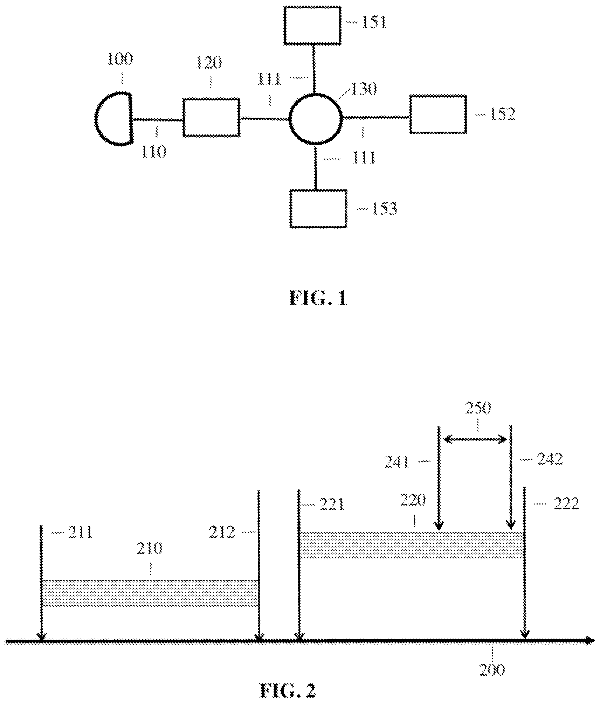

Figur 1 zeigt den Aufbau eines SoS bestehend aus vier unabhängigen EDV Systemen **120, 151, 152, 153** und ein die EDV Systeme verbindendes Kommunikationssystem **130,** das mit Datenleitungen 111 mit den vier EDV Systemen **120,151,152,153** verbunden ist. Es wird davon ausgegangen, dass die vier EDV Systemen **120, 151, 152, 153** eine gemeinsame globale Zeit mit der Präzision *P* aufbauen. Diese globale Zeit kann mit der externen Zeit TAI z.B. über ein GPS Signal mit der Genauigkeit *A* synchronisiert werden. Der Aufbau einer fehlertoleranten globalen Zeit mit der Präzision *P* und die externe Uhrensynchronisation mit der Genauigkeit *A* sind in [4] ausführlich beschrieben. Es ist vorteilhaft, wenn die vier EDV Systemen **120, 151, 152, 153** nur in erlaubten Zeitintervallen (wie in [4] unter dem Namen *sparse time model* beschrieben) Nachrichten senden, damit die Nachrichten im gesamten SoS konsistent geordnet werden können.

Der Problemsteller **100** ist über eine Datenverbindung **110** mit dem EDV System **120** verbunden. Das EDV System **120** unterstützt den Problemsteller **100** bei der Formulierung seines Problems und dem Aufsuchen eines konkreten *Lösungszustands.* In der Folge unterteilt das EDV System **120** den Pfad vom gegebenen *Ausgangszustand* zum *Lösungszustand* durch die Festlegung einer Sequenz von *Zwischenzuständen,* wie z.B. in [5] angeführt. Dieses Problemlösungsverfahren basiert auf der Annahme, dass es wesentlich einfacher ist, einen Zielzustand anzugeben als einen Weg zu finden, der zu diesem Zielzustand führt [5, p.76]. Das EDV System **120** sucht zuerst einen Dienstanbieter, der die Transformation vom Ausgangszustand zum ersten Zwischenzustand durchführen kann. Ein EDV System, das einen Dienst anfordert, bezeichnen wird als ein *SRS* (*service requesting system*), während ein EDV System, das einen Dienst anbietet, ein *SPS* (*service providing system*) genannt wird. Dieser Prozess der Transformation von einem Zwischenzustand zum nächsten Zwischenzustand wird wiederholt, bis der Lösungszustand erreicht ist.

Im Beispiel der Figur 1 verwaltet das EDV System **153** einen *Katalog,* in dem die Dienste von vorhandenen Dienstanbietern syntaktisch und semantisch beschrieben sind. Das SRS **120** konsultiert diesen Katalog, um herauszufinden, welches EDV System den gewünschten Dienst anbietet [3]. Es wird nun von der Annahme ausgegangen, dass das SPS **151** ein Dienstanbieter ist, der den gesuchten Dienst anbietet. Als nächstes untersucht das SRS **120** die Schnittstellenspezifikation des SPS **151.** Erfindungsgemäß ist in dieser Schnittstellenspezifikation mindestens ein Gültigkeitszeitfeld enthalten, das angibt, bis zu welchem zukünftigen Zeitpunkt diese Schnittstellenspezifikation gültig ist. Das EDV System **151** verpflichtet sich selbst, vor dem im Gültigkeitszeitfeld enthaltenen Zeitpunkt keine Änderung der Schnittstellenspezifikation vorzunehmen. In der Schnittstellenspezifikation des SPS **151** ist auch ein weiteres Feld, genannt *timeout_1,* enthalten. In diesem Feld befindet sich das maximale Zeitintervall, das benötigt wird um eine Dienstanforderung im SPS **151** abzuarbeiten. Das SRS **120** benötigt diese Information, um einerseits zu überprüfen, ob die Schnittstellenspezifikation von SPS **151** auch noch am Ende der Abarbeitungszeit gültig sein wird und anderseits, um einen *fail-silent Fehler* (siehe [4]) des SPS **151** sofort erkennen zu können.

Der zeitliche Ablauf der Ereignisse ist in Figur 2 gezeigt. Auf der Abszisse **200** von Figur 2 ist das Fortschreiten der Echtzeit dargestellt. Zum Zeitpunkt **211** legt das SPS **151** das Intervall fest, während dessen die Schnittstellenspezifikation von SPS **151** gültig ist. Dieses Intervall hat die Dauer **210** und den Endzeitpunkt **212,** im Intervall zwischen den Zeitpunkten **212** und **221** bietet SPS **151** keine gültige Schnittstellenspezifikation an. Zum Zeitpunkt **221** legt das SPS **151** das nächste Intervall mit der Dauer **220** und dem Endzeitpunkt **222** fest, während dessen die Schnittstellenspezifikation des SPS **151** gültig ist. Zum Zeitpunkt **241** fordert das SRS **120** einen Dienst von SPS **151** an. Die Abarbeitung dieses Dienstes benötigt die durch das Intervall **250** dargestellte Zeitdauer (*timeout_1*)*.* Da das Ende von *timeout_1* **242** vor **222** liegt, kann der Auftrag vor dem Ablauf der Gültigkeit ausgeführt werden. Wenn bis zum Zeitpunkt **242** keine Antwort vom SPS **151** an das SRS **120** eintrifft, so nimmt das SRS **120** an, dass ein *fail-silent* Ausfall von SPS **151** vorliegt.

Um sicherzustellen, dass ein SRS **120** keine zeitlich ungültige Schnittstelle anspricht, kann die Computer Hardware des angesprochenen SPS **151** autonom überprüfen, ob die globale Zeit gleich einer der in der Schnittstelle enthaltenen Gültigkeitszeiten ist und, falls dies der Fall ist, bei Zugriff auf die Schnittstelle durch ein SRS **151** eine Fehlermeldung auslösen.

### Zitierte Literatur

[1] US 7,979,247 Butterfield, et al.. *System, method and computer program product for developing a system-of-systems architecture model.* Granted July 12, 2011
[2] US 7,797,141 Kinsella et al.. *Remote component and connection architecture.* Granted June 8, 2010.
[3] Sycara, C. et al.. Automated Discovery, Interaction and Composition of Semantic Web Services, Web-Semantic Journal., retrieved Dec.7, 2011 from URL: test.websemanticsjournal.org. pp. 1-27.
[4] Kopetz, H. Real-Time Systems, Design Principles for Distributed Embedded Applications. Springer Verlag. 2011.
[5] Newell, A.. Human Problem Solving. Longman Higher Education.1972.

## Patentansprüche

1. Verfahren zur Integration einer Menge von EDV-Systemen (120, 151, 152, 153) in ein System-of-Systems, wobei ein einen Dienst anbietendes System (151) in einer den Dienst spezifizierenden Schnittstelle mindestens ein Gültigkeitszeitfeld verwaltet, welches angibt, bis zu welchem zukünftigen Gültigkeitszeitpunkt (222) die Syntax und Semantik der Schnittstellenspezifikation gültig sein werden, und wobei das den Dienst anbietende System (151) sich selbst dazu verpflichtet, vor diesem Gültigkeitszeitpunkt keine Änderungen in der Schnittstellenspezifikation und den darin enthaltenen Informationen vorzunehmen, wobei alle an dem System-of-Systems beteiligten EDV-Systeme (120, 151, 152, 153) über eine globale Zeit mit der Präzision P verfügen, wobei die globale Zeit sparse ist,
und wobei die EDV-Systeme (120, 151, 152, 153) nur in den erlaubten Zeitintervallen der sparse Zeit Nachrichten senden, und wobei
die Schnittstellenspezifikation des einen Dienst anbietenden Systems (151) ein weiteres Feld, genannt Timeoutfeld_1, enthält, in welchem sich das maximale Zeitintervall, das benötigt wird, um eine Dienstanforderung in dem den Dienst anbietenden System (151) abzuarbeiten, befindet, und wobei
ein einen Dienst anforderndes System (120) vor der Inanspruchnahme eines Dienstes des den Dienst anbietenden Systems (151) überprüft, ob das erwartete Ende des Dienstes vor dem Gültigkeitszeitpunkt (222) liegt, der in der Schnittstellenspezifikation des aufgerufenen, den Dienst anbietenden Systems (151) enthalten ist.

2. Verfahren nach Anspruch 1, wobei die globale Zeit mit der temps atomique international (TAI) mit einer Genauigkeit A synchronisiert ist.

3. Verfahren nach Anspruch 1 oder 2, wobei ein einen Dienst anforderndes System (120) bei Aufruf eines Dienstes eines einen Dienst anbietenden Systems (151) den in dem Timeoutfeld_1 des den Dienst anbietenden Systems (151) enthaltenen Wert als Timeout setzt, um einen Antwortfehler des den Dienst anbietenden Systems (151) sofort erkennen zu können.

4. System-of-Systems, umfassend eine Anzahl an EDV-Systemen (120, 151, 152, 153), welche über ein Kommunikationssystem (130) miteinander verbunden sind, wobei ein einen Dienst anbietendes System (151) in einer den Dienst spezifizierenden Schnittstelle mindestens ein Gültigkeitszeitfeld verwaltet, welches angibt, bis zu welchem zukünftigen Gültigkeitszeitpunkt (222) die Syntax und Semantik der Schnittstellenspezifikation gültig sein werden, und wobei das den Dienst anbietende System (151) dazu eingerichtet ist, sich selbst dazu zu verpflichten, vor diesem Gültigkeitszeitpunkt keine Änderungen in der Schnittstellenspezifikation und den darin enthaltenen Informationen vorzunehmen, wobei alle an dem System-of-Systems beteiligten EDV-Systeme (**120, 151, 152, 153**) über eine globale Zeit mit der Präzision P verfügen, wobei die globale Zeit sparse ist, und wobei die EDV-Systeme (120, 151, 152, 153) dazu eingerichtet sind, nur in den erlaubten Zeitintervallen der sparse Zeit Nachrichten zu senden, und wobei
die Schnittstellenspezifikation des einen Dienst anbietenden Systems (151) ein weiteres Feld, genannt Timeoutfeld_1, enthält, in welchem sich das maximale Zeitintervall, das benötigt wird, um eine Dienstanforderung in dem den Dienst anbietenden System (151) abzuarbeiten, befindet, und wobei
ein einen Dienst anforderndes System (120) dazu eingerichtet ist, vor der Inanspruchnahme eines Dienstes des den Dienst anbietenden Systems (151) zu überprüfen, ob das erwartete Ende des in Anspruch genommen Dienstes vor dem Gültigkeitszeitpunkt (222) liegt, der in der Schnittstellenspezifikation des aufgerufenen, den Dienst anbietenden Systems (151) enthalten ist.

5. System-of-Systems nach Anspruch wobei die globale Zeit mit der temps atomique international (TAI) mit einer Genauigkeit A synchronisiert ist.

6. System-of-Systems nach Anspruch 4 oder 5, wobei ein einen Dienst anforderndes System (120) dazu eingerichtet ist, bei Aufruf eines Dienstes eines einen Dienst anbietenden Systems (151) den in dem Timeoutfeld_1 des den Dienst anbietenden Systems (151) enthaltenen Wert als Timeout zu setzen, um einen Antwortfehler des den Dienst anbietenden Systems (151) sofort erkennen zu können.

## Claims

1. A method for integrating a quantity of EDP systems (120, 151, 152, 153) into a system-of-systems, wherein a service providing system (151) in an interface specifying the service manages at least one validity time field that specifies the future validity time (222) up to which the syntax and the semantics of an interface specification will be valid, and wherein the service providing system (151) ensures that before said validity time no changes to the interface specification or to the information contained therein will be made,
wherein
all EDP systems (120, 151, 152, 153) participating in the system-of-systems have a global time with the precision P, wherein the global time is sparse
and wherein the EDP systems (120, 151, 152, 153) transmit messages only in the permitted time intervals of the sparse time, and wherein
the interface specification of the service providing system (151) contains another field, called Timeoutfeld_1, in which is disposed the maximum time interval that is required to process a service request in the service providing system (151), and wherein
prior to the usage of a service of the service providing system (151), a service requesting system (120) checks whether the expected end of the service is prior to the validity time (222) that is included in the interface specification of the retrieved service providing system (151).

2. The method according to claim 1, wherein the global time is synchronized with the Temps Atomique International (TAI) with an accuracy A.

3. The method according to claim 1 or 2, wherein, when a service of a service providing system (151) is retrieved, a service requesting system (120) sets the value contained in the Timeoutfeld_1 of the service providing system (151) as a timeout in order to be able to immediately detect a response error of the service providing system (151).

4. A system-of-systems, comprising a number of EDP systems (120, 151, 152, 153) that are connected to one another via a communications system (130), wherein a service providing system (151) in an interface specifying the service manages at least one validity time field that specifies the future validity time (222) up to which the syntax and semantics of the interface specification will be valid, and wherein the service providing system (151) ensures that before said validity time no changes to the interface specification or to the information contained therein will be made,
wherein
all EDP systems (120, 151, 152, 153) participating in the system-of-systems have a global time with the precision P, wherein the global time is sparse, and wherein
the EDP systems (120, 151, 152, 153) are set up to transmit messages only in the permitted time intervals of the sparse time, and wherein
the interface specification of the service providing system (151) contains another field, called Timeoutfeld_1, in which is disposed the maximum time interval that is required to process a service request in the service providing system (151), and wherein
prior to the usage of a service of the service providing system (151), a service requesting system (120) requesting a service is set up to check whether the expected end of the service used is prior to the validity time (222) that is included in the interface specification of the retrieved service providing system (151).

5. The system-of-systems according to claim 4, wherein
the global time is synchronized with the Temps Atomique International (TAI) with an accuracy A.

6. The system-of-systems according to claim 4 or 5, wherein
during retrieval of a service of a service providing system (151), a service requesting system (120) is set up to set the value contained in the Timeoutfeld_1 of the service providing system (151) as a timeout in order to be able to immediately detect a response error of the service providing system (151).

## Revendications

1. Procédé d'intégration d'une quantité de systèmes de traitement électronique des données (EDV) (120, 151, 152, 153) dans un système-de-systèmes, dans lequel un système proposant un service (151) gère, dans une interface spécifiant le service, au moins un champ de temps de validité qui indique jusqu'à quel délai de validité (222) à venir la syntaxe et la sémantique de la spécification d'interface seront valables, et dans lequel le système proposant le service (151) s'engage lui-même à ne réaliser, avant ce délai de validité, aucune modification dans la spécification d'interface ni dans les informations contenues dans celle-ci,
dans lequel
tous les systèmes EDV (120, 151, 152, 153) participant au système-de-systèmes disposent d'un temps global avec la précision P, dans lequel le temps global est clairsemé,
et dans lequel les systèmes EDV (120, 151, 152, 153) envoient des messages seulement dans les intervalles temporels autorisés du temps clairsemé, et dans lequel
la spécification d'interface du système proposant un service (151) contient un autre champ, dénommé Timeoutfeld_1, dans lequel se trouve l'intervalle temporel maximal, qui est nécessaire pour exécuter une demande de service dans le système proposant le service (151), et dans lequel
un système demandant un service (120) contrôle avant le recours à un service du système proposant le service (151) si la fin attendue du service se trouve avant le délai de validité (222), qui est contenu dans la spécification d'interface du système proposant le service (151) appelé.

2. Procédé selon la revendication 1, dans lequel le temps global est synchronisé avec le temps atomique international (TAI) avec une précision A.

3. Procédé selon l'une des revendications 1 ou 2, dans lequel
un système demandant un service (120) place en tant que Timeout, lors de l'appel d'un service d'un système proposant un service (151), la valeur contenue dans le Timeoutfeld_1 du système proposant le service (151) pour pouvoir reconnaître immédiatement une erreur de réponse du système proposant le service (151).

4. Système-de-systèmes, comportant une pluralité de systèmes EDV (120, 151, 152, 153), lesquels sont reliés les uns aux autres par un système de communication (130), dans lequel un système proposant un service (151) gère, dans une interface spécifiant le service, au moins un champ de temps de validité qui indique jusqu'à quel délai de validité (222) à venir la syntaxe et la sémantique de la spécification d'interface seront valables, et dans lequel le système proposant le service (151) est configuré de façon à s'engager lui-même à ne réaliser, avant ce délai de validité, aucune modification dans la spécification d'interface ni dans les informations contenues dans celle-ci,
dans lequel
tous les systèmes EDV (120, 151, 152, 153) participant au système-de-systèmes disposent d'un temps global avec la précision P, dans lequel le temps global est clairsemé, et dans lequel
les systèmes EDV (120, 151, 152, 153) sont configurés de façon à envoyer des messages seulement dans les intervalles temporels autorisés du temps clairsemé, et dans lequel
la spécification d'interface du système proposant un service (151) contient un autre champ, dénommé Timeoutfeld_1, dans lequel se trouve l'intervalle temporel maximal, qui est nécessaire pour exécuter une demande de service dans le système proposant le service (151), et dans lequel
un système demandant un service (120) est configuré de façon à contrôler, avant le recours à un service du système proposant le service (151), si la fin attendue du service nommé dans la demande se trouve avant le délai de validité (222) qui est contenu dans la spécification d'interface du système proposant le service (151) appelé.

5. Système-de-systèmes selon la revendication 4, dans lequel
le temps global est synchronisé avec le temps atomique international (TAI) avec une précision A.

6. Système-de-systèmes selon l'une des revendications 4 ou 5, dans lequel
un système demandant un service (120) est configuré de façon à placer en tant que Timeout, lors de l'appel d'un service d'un système proposant un service (151), la valeur contenue dans le Timeoutfeld_1 du système proposant le service (151) pour pouvoir reconnaître immédiatement une erreur de réponse du système proposant le service (151).
